# EUROPEAN PATENT APPLICATION

(11) **EP 4 589 501 A1**
(43) Date of publication of application: **23.07.2025**
(21) Application number: 24153044.3
(22) Date of filing: 22.01.2024
(51) Int. Cl.: G06Q 10/047, B65G 1/04, B65G 1/06, B65G 1/137, G06Q 10/0631, G06Q 10/087

(54) **METHOD AND SYSTEM FOR SCHEDULING ORDERS IN AN AUTOMATED STORAGE AND RETRIEVAL SYSTEM**

(71) Applicant: AUTOSTORE TECHNOLOGY AS, 5578 Nedre Vats (NO)
(72) Inventor: Hermansen, Jon, 5578 Nedre Vats (NO)
(74) Representative: Kilburn & Strode LLP

(57) **Abstract**

A method, system, controller and computer program product configured to scheduling orders of items in an automated storage and retrieval system. For each order, locations of a set of storage containers holding items listed in the order are identified. The total time required to assemble the order at each available port is calculated, and the orders are scheduled by assigning a port requiring least amount of time to deliver the items listed in the order.

## Description

### TECHNICAL FIELD

The present invention relates to a method, system, and computer program product for retrieving items stored in storage containers of an automated storage and retrieval system, and more specifically to automatically scheduling items listed in an order to be assembled by assigning a port to the order.

### BACKGROUND

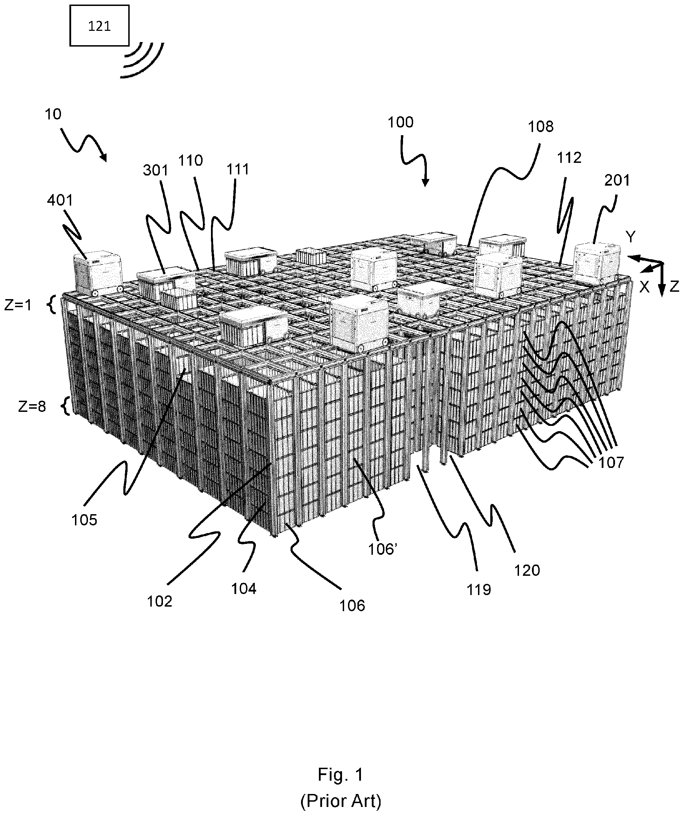

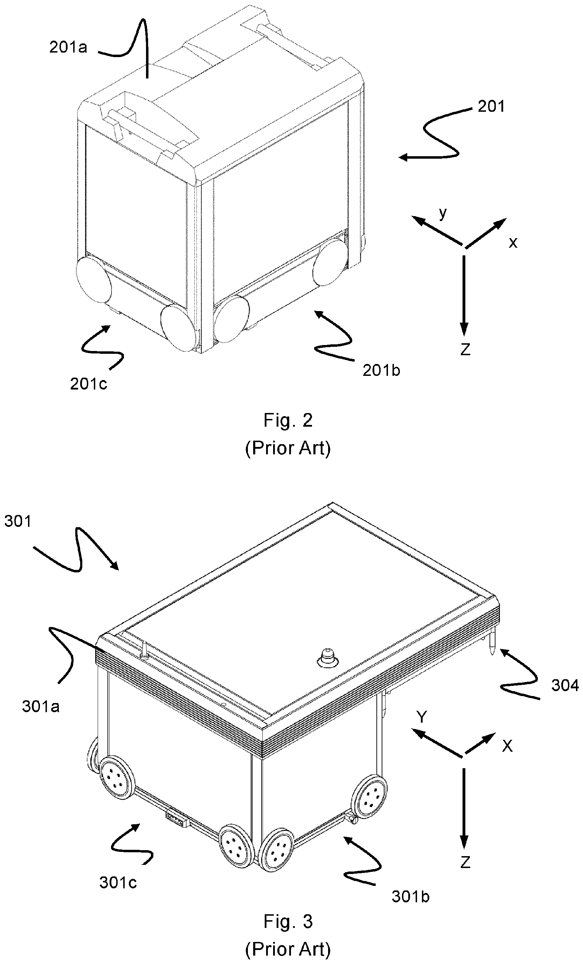

Figure 1 discloses a prior art automated storage and retrieval system 10 with a framework structure 100 and Figs. 2, 3 and 4 disclose three different prior art container handling vehicles 201,301,401 suitable for operating on such a system 10.

The framework structure 100 comprises upright members 102 and a storage volume comprising storage columns 105 arranged in rows between the upright members 102. In these storage columns 105 storage containers 106, also known as bins, are stacked one on top of one another to form stacks 107. The members 102 may typically be made of metal, e.g. extruded aluminum profiles.

The framework structure 100 of the automated storage and retrieval system 10 comprises a rail system 108 arranged across the top of framework structure 100, on which rail system 108 a plurality of container handling vehicles 201,301,401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301,401 in a first direction X across the top of the frame structure 100, and a second set of parallel rails 111 arranged perpendicular to the first set of rails 110 to guide movement of the container handling vehicles 201,301,401 in a second direction Y which is perpendicular to the first direction X. Containers 106 stored in the columns 105 are accessed by the container handling vehicles 201,301,401 through access openings 112 in the rail system 108. The container handling vehicles 201,301,401 can move laterally above the storage columns 105, i.e. in a plane which is parallel to the horizontal *X-Y* plane.

The upright members 102 of the framework structure 100 may be used to guide the storage containers during raising of the containers out from and lowering of the containers into the columns 105. The stacks 107 of containers 106 are typically self-supporting.

Each container handling vehicle 201,301,401 comprises a vehicle body 201a,301a,401a and first and second sets of wheels 201b, 201c, 301b, 301c,401b,401c which enable the lateral movement of the container handling vehicles 201,301,401 in the *X* direction and in the *Y* direction, respectively. In Figs. 2, 3 and 4 two wheels in each set are fully visible. The first set of wheels 201b,301b,401b is arranged to engage with two adjacent rails of the first set 110 of rails, and the second set of wheels 201c,301c,401c is arranged to engage with two adjacent rails of the second set 111 of rails. At least one of the sets of wheels 201b, 201c, 301b,301c,401b,401c can be lifted and lowered, so that the first set of wheels 201b,301b,401b and/or the second set of wheels 201c,301c,401c can be engaged with the respective set of rails 110, 111 at any one time.

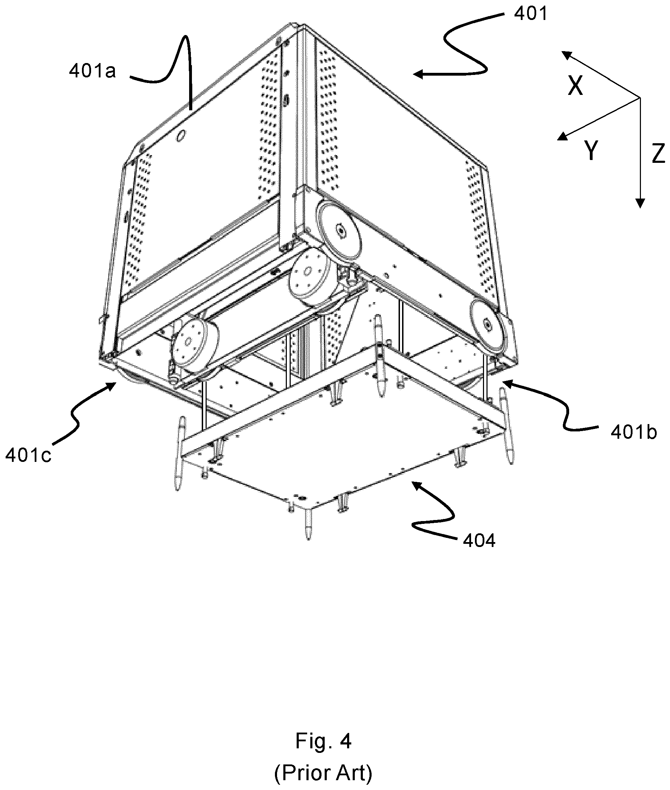

Each container handling vehicle 201,301,401 also comprises a lifting device for vertical transportation of storage containers 106, e.g. raising a storage container 106 from, and lowering a storage container 106 into, a storage column 105. The lifting device comprises one or more gripping / engaging devices which are adapted to engage a storage container 106, and which gripping / engaging devices can be lowered from the vehicle 201,301,401 so that the position of the gripping / engaging devices with respect to the vehicle 201,301,401 can be adjusted in a third direction *Z* which is orthogonal the first direction *X* and the second direction *Y*. Parts of the gripping device of the container handling vehicles 301,401 are shown in Figs. 3 and 4 indicated with reference number 304,404. The gripping device of the container handling device 201 is located within the vehicle body 201a in Fig. 2 and is thus not shown.

*Z*=1 identifies the uppermost layer available for storage containers below the rails 110,111, i.e. the layer immediately below the rail system 108, *Z*=2 the second layer below the rail system 108, *Z*=3 the third layer etc. In the exemplary prior art disclosed in Fig. 1, *Z*=8 identifies the lowermost, bottom layer of storage containers. Similarly, *X*=1...*n* and *Y*=1...*n* identifies the position of each storage column 105 in the horizontal plane. Consequently, as an example, and using the Cartesian coordinate system *X, Y, Z* indicated in Fig. 1, the storage container identified as 106' in Fig. 1 can be said to occupy storage position *X*=17, *Y*=1, *Z*=6. The container handling vehicles 201,301,401 can be said to travel in layer *Z*=0, and each storage column 105 can be identified by its *X* and *Y* coordinates. Thus, the storage containers shown in Fig. 1 extending above the rail system 108 are also said to be arranged in layer *Z*=0.

The storage volume of the framework structure 100 has often been referred to as a grid 104, where the possible storage positions within this grid are referred to as storage grid cells. Each storage column may be identified by a position in an *X-* and *Y*-direction, while each storage grid cell may be identified by a container number in the *X-, Y-* and *Z*-direction.

Each prior art container handling vehicle 201,301,401 comprises a storage compartment or space for receiving and stowing a storage container 106 when transporting the storage container 106 across the rail system 108. The storage space may comprise a cavity arranged internally within the vehicle body 201a,401a as shown in Figs. 2 and 4 and as described in e.g. WO2O15/193278A1 and WO2019/206487A1, the contents of which are incorporated herein by reference.

Fig. 3 shows an alternative configuration of a container handling vehicle 301 with a cantilever construction. Such a vehicle is described in detail in e.g. NO317366, the contents of which are also incorporated herein by reference.

The cavity container handling vehicle 201 shown in Fig. 2 may have a footprint that covers an area with dimensions in the X and Y directions which is generally equal to the lateral extent of a storage column 105, e.g. as is described in WO2O15/193278A1, the contents of which are incorporated herein by reference. The term 'lateral' used herein may mean 'horizontal'.

Alternatively, the cavity container handling vehicles 401 may have a footprint which is larger than the lateral area defined by a storage column 105 as shown in Fig. 1 and 4, e.g. as is disclosed in WO2014/090684A1 or WO2019/206487A1.

When a container handling vehicle 201, 301, 401 is requested to handle a storage container 106 at a specific grid cell, the exact destination or stop position of the vehicle body of the container handling vehicle 201, 301, 401 depends on the footprint of container handling vehicle 201, 301, 401 that is controlled. For a cavity container handling vehicle 201 shown in Fig. 2, the specific position of the grid cell will be the stop position of the vehicle body 201a. For a cantilever container handling vehicle 301 shown in figure 3, the stop position of the vehicle body 301a-will be any grid cell next to and overlapping with the specific grid cell such that the cantilever part that is handling a storage container 106 is directly above the specific grid cell.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail 110,111 may comprise two parallel tracks. In other rail systems 108, each rail in one direction (e.g. an X direction) may comprise one track and each rail in the other, perpendicular direction (e.g. a Y direction) may comprise two tracks. Each rail 110,111 may also comprise two track members that are fastened together, each track member providing one of a pair of tracks provided by each rail.

WO2018/146304A1, the contents of which are incorporated herein by reference, illustrates a typical configuration of rail system 108 comprising rails and parallel tracks in both *X* and *Y* directions.

In the framework structure 100, most of the columns 105 are storage columns 105, i.e. columns 105 where storage containers 106 are stored in stacks 107. However, some columns 105 may have other purposes. In Fig. 1, columns 119 and 120 are such special-purpose columns used by the container handling vehicles 201,301,401 to drop off and/or pick up storage containers 106 so that they can be transported to an access station where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or dedicated column 105 within the framework structure 100, then picked up by any container handling vehicle 201, 301, 401 and transported to a port column 119,120 for further transportation to an access station. The transportation from the port to the access station may require movement along various directions, by means such as delivery vehicles, trolleys, or other transportation lines. Note that the term 'tilted' means transportation of storage containers 106 having a general transportation orientation somewhere between horizontal and vertical.

In Fig. 1, the first port column 119 may for example be a dedicated drop-off port column where the container handling vehicles 201,301,401 can drop off storage containers 106 to be transported to an access or a transfer station, and the second port column 120 may be a dedicated pick-up port column where the container handling vehicles 201,301,401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 10 but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1, the contents of which are incorporated herein by reference.

When a storage container 106 stored in one of the columns 105 disclosed in Fig. 1 is to be accessed, one of the container handling vehicles 201,301,401 is instructed to retrieve the target storage container 106 from its position and transport it to the drop-off port column 119. This operation involves moving the container handling vehicle 201,301,401 to a location above the storage column 105 in which the target storage container 106 is positioned, retrieving the storage container 106 from the storage column 105 using the container handling vehicle's 201,301,401 lifting device (not shown), and transporting the storage container 106 to a port, in this case the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle 201,301,401 that is subsequently used for transporting the target storage container 106 to the drop-off port column 119, or with one or a plurality of other cooperating container handling vehicles 201,301,401. Alternatively, or in addition, the automated storage and retrieval system 10 may have container handling vehicles 201,301,401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201,301,401 is instructed to pick up the storage container 106 from the pick-up port column 120 and transport it to a location above the storage column 105 where it is to be stored. After any storage containers 106 positioned at or above the target position within the stack 107 have been removed, the container handling vehicle 201,301,401 positions the storage container 106 at the desired position. The removed storage containers 106 may then be lowered back into the storage column 105 or relocated to other storage columns 105.

For monitoring and controlling the automated storage and retrieval system 10, e.g. monitoring and controlling the location of respective storage containers 106 within the framework structure 100, the content of each storage container 106, and the movement of the container handling vehicles 201,301,401 so that a desired storage container 106 can be delivered to the desired location at the desired time without the container handling vehicles 201,301,401 colliding with each other, the automated storage and retrieval system 10 comprises a control system 121 which typically is computerized and which typically comprises a database for keeping track of the storage containers 106.

Jobs are assigned to container handling vehicles 201,301,401 for handling and transporting storage containers 106 from one location to another when operating on the rail system 108. When receiving an instruction to perform a job, a container handling vehicle 201,301,401 typically moves and follows a path from its current location to a destination for delivering or retrieving a storage container 106.

Larger automated storage and retrieval systems 10 typically comprise a plurality of ports located at different locations on the storage and retrieval systems 10. Product items are placed in storage containers 106 stored in storage columns 105 throughout the storage volume of the automated storage and retrieval system 10.

Normally, items listed in an order are delivered to a port selected by an operator, unaware of where storage containers 106 holding the items in the order are located. This means that storage containers 106 holding the items may need to be moved over relative long distances to a selected port before the items are consolidated by human interventions or special robotic manipulators to complete the order. Moving storage containers 106 over relative long distances to reach a selected port may influence and delay delivery of storage containers 106 to the port as well as impeding traffic flow of all container handling vehicles 201,301,401 operating on the automated storage and retrieval system 10.

The present invention seeks to overcome or at least ameliorate to a certain degree the problems associated with the prior art.

### SUMMARY

According to a first aspect, there is provided a method of scheduling orders of items in an automated storage and retrieval system comprising a grid structure with storage columns making a storage volume for holding stacks of storage containers, where the grid structure has a corresponding rail system above the storage columns for guiding movements of container handling vehicles adapted for transferring storage containers between the storage columns and a plurality of ports of the storage and retrieval system, the orders being assembled from items stored in the storage containers at different locations in the storage volume, the method comprises:
- for each order, identifying locations of a set of storage containers in the storage volume that are holding the items which are required to make up a given order;
- for each order, based upon the locations within the storage volume of each storage container in the set and a time required for available container handling vehicles to deliver the set of storage containers to the different ports to retrieve the items of the order, calculating a total time required to assemble the order at each port of the plurality of ports;
- scheduling the orders to be assembled by assigning a port to the order where the order can be assembled in the least amount of time from the storage containers delivered to the port by available container handling vehicles used in the time calculation.

Such a method can provide an efficient approach for selecting a port for delivering storage containers holding items of an order. The port selected is based on least cost to bring the storage containers holding items of an order to the port. This will typically be the port where items in an order can be assembled in the least amount of time.

The method can reduce driving distances and time used for the container handling vehicles, since they will be more assigned towards an area of the grid, thereby reducing moving into other areas which could cause conflicting traffic. This has the potential to reduce the time spent for moving storage containers holding an order.

Optionally, the time required for available container handling vehicles to deliver the set of storage containers to the different ports is determined based on the distance available container handling vehicles would need to travel to retrieve items in the order.

Optionally, the step of identifying locations of the set of storage containers in the storage volume that are holding the items which are required to make up a given order includes identifying the X, Y and Z grid positions of the set of storage containers. This means for example, the location in the grid to which the container handling vehicles need to travel and also the depth of container within the grid. The amount of digging required to retrieve a container may also be taken into account.

Optionally, in case of several locations of storage containers holding the same item of an order are identified, a storage container contributing to least amount of time for assembling the order at a port is selected.

Optionally, the step of calculating time required to assemble the order to each port is based on live system data comprising one or more of inventory data of items, location data of storage containers holding the items, positional data, status of container handling vehicles, port locations and status of ports.

Optionally, the prepared orders are reviewed prior to scheduling orders to determine a sequence of preparing items in orders. By doing this, storage containers holding items listed in consecutive orders do not have to returned for storage but may be placed close to a port assigned for the next order.

Optionally, the sequence of scheduling orders is established such that storage containers holding the same items listed in different orders are handled successively. If for instance an item is listed in two consecutive orders, the storage container holding several of such items may be the last to be delivered to a port in a first order, and the first to be delivered to a port in the next order. This may be time efficient for the second order.

Optionally, if two or more orders include the same item and if different storage containers contain the same item, the available container handling vehicles retrieve the same item from different storage containers for different orders. This can seek to avoid conflict with other orders.

Optionally, the plurality of ports are spaced around the periphery of the grid structure. This can allow for ease of movement of container handling vehicles with respect to each other and avoid potential conflict with regard to vehicle routing.

In a second aspect, there is provided a system for scheduling orders of items in an automated storage and retrieval system comprising a grid structure with storage columns making a storage volume for holding stacks of storage containers, where the grid structure has a corresponding rail system above the storage columns for guiding movements of container handling vehicles adapted for transferring storage containers between the storage columns and a plurality of ports of the storage and retrieval system, the orders being assembled from items stored in the storage containers at different locations in the storage volume. The system comprises a control system connected to a port selector system configured to:
- for each order, identifying locations of a set of storage containers in the storage volume that are holding the items which are required to make up a given order;
- for each order, based the locations within the storage volume of each storage container in the set and a time required for available container handling vehicles to deliver the set of storage containers to the different ports to retrieve the items of the order, calculating a total time required to assemble the order at each port of the plurality of ports;
- scheduling the orders to be assembled by assigning a port to the order where the order can be assembled in the least amount of time from the storage containers delivered to the port by available container handling vehicles used in the time calculation.

Optionally, the control system is configured to control available container handling vehicles used in the time calculation to retrieve storage containers from the storage volume and deliver them to the port assigned by the port selector system.

Optionally, live system data is sent to the control system, said data comprising one or more of inventory data of items, location data of storage containers holding the items, positional data, status of container handling vehicles, port locations and status of ports.

Optionally, the control system is configured to carry out the method according to the first aspect of any optional feature thereof.

According to a third aspect, there is provided a computer program product for the port selector system according to the second aspect, wherein the computer program product comprises instructions that when executed on the port selector system performs the method according to the first aspect or any optional feature thereof.

### BRIEF DESCRIPTION OF THE DRAWINGS

The following drawings are appended to facilitate the understanding of the invention. The drawings show embodiments of the invention, which will now be described by way of example only.
Fig. 1 is a perspective view of a framework structure of a prior art automated storage and retrieval system.
Fig. 2 is a perspective view of a prior art container handling vehicle having an internally arranged cavity for carrying storage containers therein.
Fig. 3 is a perspective view of a prior art container handling vehicle having a cantilever for carrying storage containers underneath.
Fig. 4 is a perspective view, seen from below, of a prior art container handling vehicle having an internally arranged cavity for carrying storage containers therein.
Fig. 5 is a schematic top view of an exemplary rail system and container handling vehicles assigned to deliver items to selected ports among a plurality of ports.
Fig. 6 is a flow chart illustrating the different steps involved when performing the method.
Fig. 7 illustrates signal paths between the port selector system, central control system, container handling vehicles and selected ports.

### DETAILED DESCRIPTION

Embodiments of the invention will now be described in greater detail and by way of example only with reference to the figures. It should be understood, however, that the drawings are not intended to limit the invention to the subjectmatter depicted in the drawings.

The automated storage and retrieval system 10 described herein is constructed in a similar manner with a framework structure 100 described in the prior art above in connection with Fig. 1. That is, the framework structure 100 comprises several upright members 102, and comprises a first, upper rail system 108 extending in the X direction and Y direction. Examples of container handling vehicles 201,301,401 running on the rail system 108 are illustrated in Figs. 2-4.

The framework structure 100 further comprises storage compartments in the form of storage columns 105 provided between the members 102 wherein storage containers 106 are stackable in stacks 107 within the storage columns 105.

The framework structure 100 can be of any size. It is understood that the framework structure can be considerably wider and/or longer and/or deeper than disclosed in Fig. 1. For example, the framework structure 100 may have a horizontal extent of more than 700×700 columns and a storage depth of more than twelve containers.

Large automated storage and retrieval systems 10 will typically comprise a plurality of container handling vehicles 201,301,401 handling storage containers 106. It will further typically comprise charging stations and a plurality of ports 450 located at different locations for the container handling vehicles 201,301,401 deliver and retrieve storage containers 106.

When an automated storage and retrieval system 10 receives an order to be processed, storage containers 106 holding the items listed in the order will be located and container handling vehicles 201,301,401 will be selected and instructed to retrieve the storage containers 106 from their locations in the storage volume and bring them to a port 450 where the items are consolidated by human interventions or special robotic manipulators to complete the order. The port 450 where storage containers 106 holding items listed in an order are delivered is normally selected by an operator, unaware of where storage containers 106 holding the items in the order are located.

The solution disclosed herein provides an efficient solution for automatically selecting a port 450 for delivering storage containers 106 holding items of an order.

The solution can reduce driving distances and time used for the container handling vehicles 201,301,401, since they will be more assigned towards an area of the gird, thereby reducing moving into other areas, causing conflicting traffic. This is achieved by a port selector system configured to assigning a port 450 to items in an order.

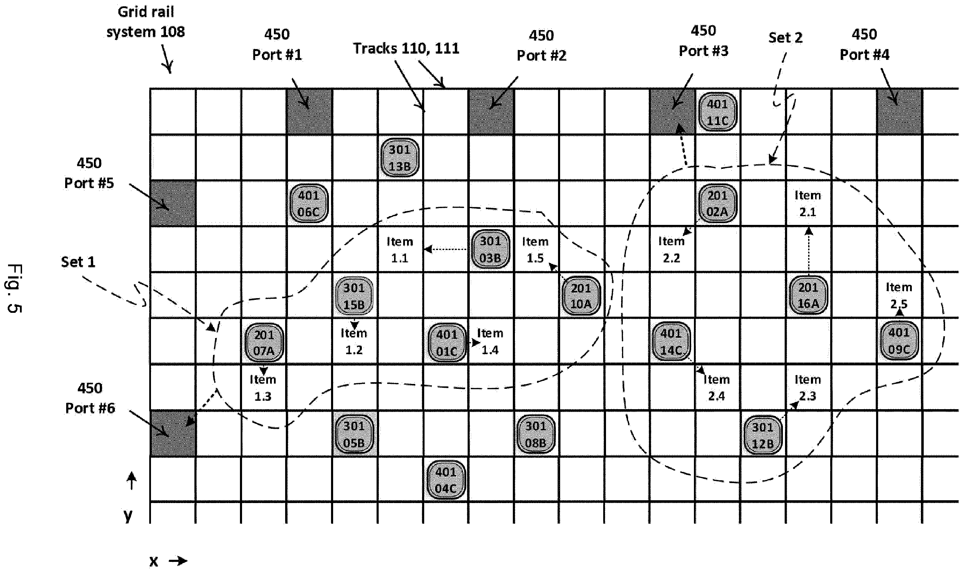

The solution will now be explained in detail by referring to an embodiment as illustrated in Figs. 5 to 7.

Figure 5 illustrates a top view of an automated storage and retrieval system 10 comprising grid cells where storage containers 106 holding items are stored. A grid rail system 108 is arranged across the framework structure 100 of the automated storage and retrieval system 10. The figure illustrates a part of a larger automated storage and retrieval system 10 comprising a plurality of uniquely identified container handling vehicles 201,301,401 and a plurality of ports 450 where storage containers are delivered by means of the container handling vehicles 201,301,401 moving along tracks 110, 111 of the grid rail system 108. The figure shows locations of different types of identified container handling vehicles 201,301,401 on the rail system. Different grid cells are provided with labels. The grid cell labeled 'Item 1.1.' means that this grid cell comprises a storage container 106 holding item 1 of order 1. The grid cell labeled 'Item 1.2.' means that this grid cell comprises a storage container holding item 2 of order 1 etc. Likewise, the grid cell labeled 'Item 2.1.' means that this grid cell comprises a storage container 106 holding item 1 of order 2. The grid cell labeled 'Item 2.2.' means that this grid cell comprises a storage container holding item 2 of order 2 etc.

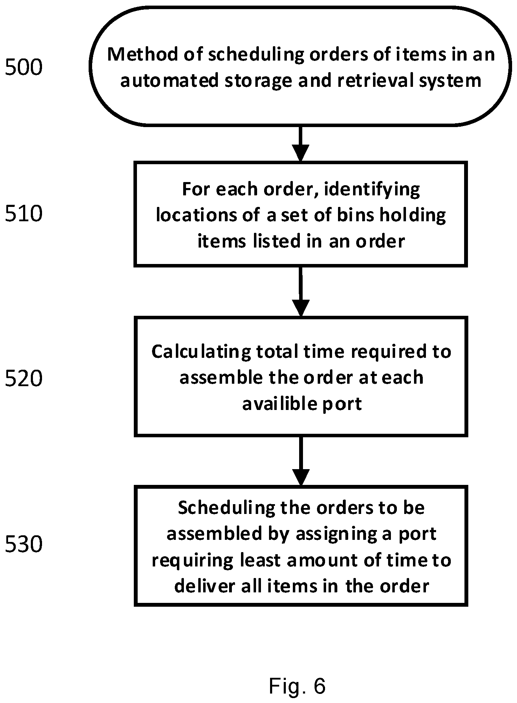

Figure 6 is a flowchart describing the different steps performed by the method 500 of scheduling orders of items in an automated storage and retrieval system 10 and assigning a port 450 where storage containers 106 holding items listed in the order are to be delivered.

The first step 510 of the method is identifying locations of a set of storage containers 106 in the storage volume that are holding the items which are required to make up a given order.

The example visualized in figure 5, shows locations of items of two different orders, each with five listed items, i.e. Order 1 listing Items 1 to 5 (1.1 - 1.5) and Order 2 listing Items 1 to 5 (2.1 - 2.5).

The second step 520 is calculating a total time required to assemble the order at each port 450 of the plurality of ports 450. The calculation is based on the identified locations within the storage volume of each storage container 106 in the set holding listed items of an order, and a time required for available container handling vehicles 201,301,401 to deliver the set of storage containers 106 to the different ports 450 to retrieve the items of the order.

The third step 530 of the method is scheduling the orders to be assembled by assigning a port 450 to the order where the order can be assembled in the least amount of time from the storage containers 106 delivered to the port 450 by the available container handling vehicles 201,301,401 used in the time calculation.

In figure 5, the dotted lines encircling the two sets of container handling vehicles 201,301,401 indicate the container handling vehicles 201,301,401 assigned to deliver storage containers 106 to respective ports 450. Assigned container handling vehicles 201,301,401 will typically be the ones currently available and located close to a grid cell where items listed in an order are stored in storage containers 106. This requires least amount of time to reach the grid cell.

Set 1 specifies container handling vehicles 201,301,401 assigned to deliver requested storage containers holding items 1 to 5 listed in Order 1 to port #6, while Set 2 specifies container handling vehicles 201,301,401 assigned to deliver storage containers holding items 1 to 5 listed in Order 2 to port #3.

The container handling vehicle 201 named 07A is selected to retrieve a storage container 106 holding item 3 of Order 1. Container handling vehicle 301 named 15B is selected to retrieve a storage container 106 holding item 2 of Order 1 etc. Likewise, container handling vehicle 201 named 02A is selected to retrieve a storage container 106 holding item 2 of Order 2. Container handling vehicle 401 named 14C is selected to retrieve a storage container 106 holding item 4 of Order 2 etc.

For each assigned container handling vehicle 201,301,401 in a set, the time to reach each available port 450 is calculated, and the time for all container handling vehicles 201,301,401 in a set to reach each port 450 is calculated. Based on the time calculations, the port 450 assigned for delivering storage containers 106 holding items of an order is the one requiring least amount of time for delivering and assembling the items listed in an order in the set to a port 450.

The time for bringing a storage container 106 to a port 450 may include time used for a digging operation. This is the case if a requested storage container 106 holding an item of an order is located further down in a stack of storage containers 106. In this case, storage containers 106 stacked on top of the requested storage container 106 must first be removed.

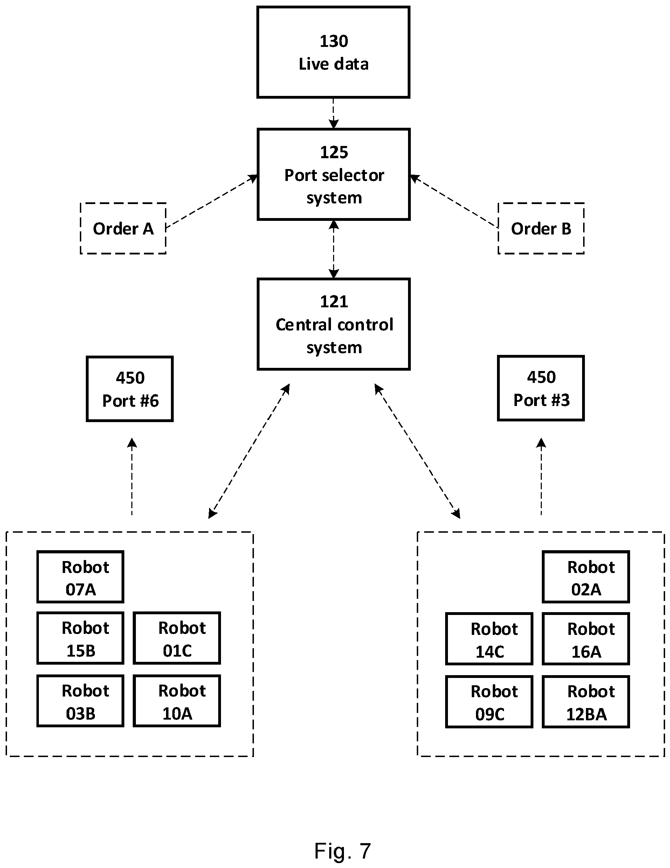

Figure 7 illustrates signal paths between a Port selector system 125, a Central control system 121, container handling vehicles 106 (Robots) and selected Ports 450 explained in the example described above with reference to figures 5 and 6. The method of scheduling orders of items to be assembled by assigning a port to the order is performed by a computer program product being executed by the Port selector system 125. When orders with listed items are received, e.g. Order A and B, live data 130 is input and used for determining locations of storage containers 106 holding the listed items, locations of available container handling vehicles 201,301,401 and locations of available ports. The live data may further comprise current assignments for container handling vehicles 201,301,401. This will tell if a container handling vehicle 201,301,401 is about to finish a job and soon will be available for handling a storage container 106 holding an item listed in an order to be assembled.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A method of scheduling orders of items in an automated storage and retrieval system (10) comprising a grid structure with storage columns (105) making a storage volume for holding stacks of storage containers (106), where the grid structure has a corresponding rail system (108) above the storage columns (105) for guiding movements of container handling vehicles (201,301,401) adapted for transferring storage containers (106) between the storage columns (105) and a plurality of ports (450) of the storage and retrieval system (10), the orders being assembled from items stored in the storage containers (106) at different locations in the storage volume, the method comprising:
- for each order, identifying locations of a set of storage containers (106) in the storage volume that are holding the items which are required to make up a given order;
- for each order, based upon the locations within the storage volume of each storage container (106) in the set and a time required for available container handling vehicles (201,301,401) to deliver the set of storage containers (106) to the different ports (450) to retrieve the items of the order, calculating a total time required to assemble the order at each port (450) of the plurality of ports (450);
- scheduling the orders to be assembled by assigning a port (450) to the order where the order can be assembled in the least amount of time from the storage containers (106) delivered to the port (450) by available container handling vehicles (201,301,401) used in the time calculation.

2. A method according to claim 1, wherein the time required for available container handling vehicles (201,301,401) to deliver the set of storage containers (106) to the different ports (450) is determined based on the distance available container handling vehicles would need to travel to retrieve items in the order.

3. A method according to claim 1 or 2, wherein the step of identifying locations of the set of storage containers (106) in the storage volume that are holding the items which are required to make up a given order includes identifying the X, Y and Z grid positions of the set of storage containers.

4. A method according any preceding claim, wherein, in case of several locations of storage containers (106) holding the same item of an order are identified, the storage container (106) contributing the least amount of time for assembling the order at a port is selected.

5. A method according to any preceding claim, the step of calculating time required to assemble the order to each port (450) is based on live system data (130) comprising one or more of inventory data of items, location data of storage containers holding the items, positional data, status of container handling vehicles, port (450) locations and status of ports (450).

6. A method according to any of the preceding claims, wherein prepared orders are reviewed prior to scheduling orders to determine a sequence of preparing items in orders.

7. A method according to any of the preceding claims, wherein the sequence of scheduling orders is established such that storage containers holding the same items listed in different orders are handled successively.

8. A method according to any of the preceding claims, wherein if two or more orders include the same item and if different storage containers contain the same item, the available container handling vehicles retrieve the same item from different storage containers for different orders.

9. A method according to any of the preceding claims wherein the plurality of ports are spaced around the periphery of the grid structure.

10. A system for scheduling orders of items in an automated storage and retrieval system (10) comprising a grid structure with storage columns (105) making a storage volume for holding stacks of storage containers (106), where the grid structure has a corresponding rail system (108) above the storage columns (105) for guiding movements of container handling vehicles (201,301,401) adapted for transferring storage containers (106) between the storage columns (105) and a plurality of ports (450) of the storage and retrieval system (10), the orders being assembled from items stored in the storage containers (106) at different locations in the storage volume, the system comprises a control system (121) connected to a port selector system (125) configured to:
- for each order, identifying locations of a set of storage containers (106) in the storage volume that are holding the items which are required to make up a given order;
- for each order, based upon the locations within the storage volume of each storage container (106) in the set and a time required for available container handling vehicles (201,301,401) to deliver the set of storage containers (106) to the different ports (450) to retrieve the items of the order, calculating a total time required to assemble the order at each port (450) of the plurality of ports (450);
- scheduling the orders to be assembled by assigning a port (450) to the order where the order can be assembled in the least amount of time from the storage containers (106) delivered to the port (450) by available container handling vehicles (201,301,401) used in the time calculation.

11. A system according to claim 10, wherein the control system (121) is configured to control available container handling vehicles (201,301,401) used in the time calculation to retrieve storage containers (106) from the storage volume and deliver them to the port (450) assigned by the port selector system (125).

12. A system according to claim 10 or 11, wherein live system data is sent to the control system, said data comprising one or more of inventory data of items, location data of storage containers holding the items, positional data, status of container handling vehicles, port locations and status of ports.

13. A system according to any of claims 10 to 12, where the control system is configured to carry out the method according to any of claims 1 to 9.

14. A computer program product for a port selector system (125), wherein the computer program product comprises instructions that when executed on the port selector system (125) performs the method according to any of claims 1 to 9.
